**Europäisches Patentamt**

**European Patent Office**

**Office européen des brevets**

(19)

(11) Veröffentlichungsnummer: **0 030 915**
**B1**

(12)

# EUROPÄISCHE PATENTSCHRIFT

(45) Veröffentlichungstag der Patentschrift:
**12.10.83**

(51) Int. Cl.³: **G 01 N 21/89**

(21) Anmeldenummer: **80810374.1**

(22) Anmeldetag: **01.12.80**

(54) Vorrichtung zur Überprüfung einer durch Giessen beschichteten Materialbahn auf Giesslinien.

(30) Priorität: **07.12.79 GB 7942267**

(43) Veröffentlichungstag der Anmeldung:
**24.06.81 Patentblatt 81/25**

(45) Bekanntmachung des Hinweises auf die Patenterteilung:
**12.10.83 Patentblatt 83/41**

(84) Benannte Vertragsstaaten:
**BE CH DE FR GB IT LI**

(56) Entgegenhaltungen:
**DE-A-2 150 495**
**FR-A-1 593 577**
**US-A-3 814 945**
**US-A-3 845 297**
**US-A-3 931 525**
**US-A-4 155 630**

(73) Patentinhaber: **CIBA-GEIGY AG, Patentabteilung**
**Postfach, CH-4002 Basel (CH)**

(72) Erfinder: **Ikin, John Bruce, 40 Marine Avenue,**
**Leigh-on-Sea (GB)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Vorrichtung zur Überprüfung einer durch Giessen beschichteten Materialbahn auf Giesslinien

Die Erfindung betrifft eine Vorrichtung gemäss Oberbegriff von Patentanspruch 1.

Bei der Herstellung von photographischen Filmen und Papieren wird beim Giessen der Silberhalogenid enthaltenden Lösungen auf das Trägermaterial ein sehr hoher Grad von Gleichmässigkeit angestrebt. Insbesondere muss man sehr sorgfältig darauf achten, dass die durch den Giessapparat aufgetragene Menge Giesslösung über die Giessbreite der Trägerbahn von Punkt zu Punkt weniger als 2% variiert. Erfolgt eine örtliche, diese Grenze überschreitende Variation, so wird diese im photographischen Material nach Belichtung und Verarbeitung als eine entlang der Bahn verlaufende Schliere sichtbar.

Bedingt durch das Giessen verlaufen die Dickefehler in der aufgegossenen Schicht streifen- bzw. linienförmig in Bahnlängsrichtung. Diese Fehler werden im folgenden als „Giesslinien" bezeichnet.

In der Praxis ist es bekannt, zur Qualitätsprüfung eines Gusses auf Bahnmaterial einen Lichtpunktlaserabtaster zu verwenden, der die Bahn quer mit einem schmalen Lichtstrahl zyklisch überstreicht. Photographische Güsse auf transparenten Trägermaterialien werden üblicherweise im Durchlicht untersucht, wobei sich jede Variation in der Gussdicke wegen der Lichtstreuung am Guss als Änderung der Absorption bemerkbar macht.

In Mikroaufnahmefilmen ist der Emulsionsguss sehr dünn und enthält verhältnismässig wenige Silberhalogenidkristalle pro Flächeneinheit, welche zudem klein sind. Deshalb wird Licht von der Emulsionsschicht frei durchgelassen, nur ein kleiner Anteil wird absorbiert, und das durchgelassene Licht wird nur in geringem Grad gestreut. Tritt im Guss eines solchen Produkts eine Giesslinie auf, so wird diese am besten dadurch festgestellt, dass man den Laserabtaster einen Strahl so auf die Bahn projizieren lässt, dass die nicht abgelenkte, von der Bahn durchgelassene Komponente direkt auf eine Photozelle bzw. ein der Photozelle zugeordnetes und sich quer zur Transportrichtung der Bahn erstreckendes Lichtsammelgerät fällt. Eine Variation in der Gussdicke führt zu einer Änderung im Streugrad des durch den Film gehenden Lichts und dementsprechend zu einer Änderung des die Photozelle erreichenden Lichtstroms. Da der Laserstrahl zyklisch die Bahn quer überstreicht, lassen sich Giesslinien dann als Störungen im Photozellstrom erfassen, welche beim Querüberstreichen stets an der gleichen Stelle auftreten.

Schwierigkeiten treten auf, wenn an der Photozelle und/oder an einer der optischen Komponenten, welche die nicht abgelenkte Komponente des Laserstrahls überstreicht, bevor er die Photozelle erreicht, Fehler wie z.B. Staub, Kratzer und dergleichen vorhanden sind. Da die durch solche Fehler hervorgerufenen Störungen bei der Querüberstreichung ebenfalls stets an den gleichen Stellen auftreten, lassen sie sich nicht ohne weiteres von Giesslinien unterscheiden.

Durch die Erfindung soll nun eine Vorrichtung der eingangs definierten Art dahingehend verbessert werden, dass diese Schwierigkeiten überwunden und insbesondere durch Staub oder Kratzer oder dergleichen verursachte Störungen von Giesslinien unterschieden werden können.

Die erfindungsgemässe Vorrichtung ist im Patentanspruch 1 beschrieben. Bevorzugte Ausführungsformen und Weiterbildungen ergeben sich aus den abhängigen Ansprüchen.

Aus der US-A 3 931 525 ist eine Vorrichtung zur Abtastung einer transparenten Materialbahn auf Flecken oder ähnliche Fehler bekannt. Im Unterschied zur erfindungsgemässen ist jedoch bei dieser bekannten Vorrichtung das streuende element nicht bewegt sondern feststehend. Dadurch ist diese bekannte Vorrichtung zur Detektion von Giesslinien nicht geeignet.

Wegen der Streuung der nicht abgelenkten Komponente zumindest quer zur Bahnrichtung erreicht das Licht die Photozelle gleichzeitig auf zahlreichen Wegen. Ein Staubfleck oder Kratzer, der einen dieser Wege sperrt, hat dabei nur eine kaum merkliche Auswirkung auf das Ausgangssignal der Photozelle. Das Streuelement unterdrückt auch jegliche Defekte in den optischen Eigenschaften der Photozelle und/oder des Lichtempfängers. Staub und Kratzer auf dem Streuelement selbst, welche gleichfalls zu unerwünschten Störungen im Photozellenstrom führen können, werden durch das Bewegen des Streuelementes quer zur Bahntransportrichtung unterdrückt. Durch diese Bewegung wird die durch die Defektstelle des Streuelementes bewirkte Lichtverteilung mit dem Streuelement bewegt. Eine von einer Giesslinie herrührende Störung bewegt sich nicht mit der Bewegung des Streuelementes. Dadurch können Giesslinien auch sicher von Defektstellen des Streuelementes unterschieden werden. Die Vorrichtung spricht nur auf Störungen an, die bei aufeinanderfolgenden Querüberstreichungen an der gleichen Stelle bleiben.

Das Streuelement kann sich kontinuierlich in einer Richtung entlang einem Weg quer zur Bahn bewegen. Zum Beispiel kann es als laufendes Band oder als rotierende Scheibe ausgebildet sein. Bei der Prüfung einer breiten Bahn können bei einem Streuelement in Form einer rotierenden Scheibe oder eines laufenden flexiblen Bandes praktische Probleme auftreten. Deshalb ist es oft zweckmässiger, das Streuelement in Form eines steifen Streifens zu verwenden, der quer zur Transportrichtung der Bahn liegt und sich auf einer zyklischen Bahn bewegt oder auf einer praktisch linearen Bahn hin- und herbewegt.

Gemäss einer weiteren bevorzugten Variante werden die Bewegungen des Streuelementes derart gestaltet, dass sich Schmutz, insbesondere Staub vom Streuelement ablöst. Insbesondere ist hierzu ein Antrieb vorgesehen, der das Streuelement schüttelt.

Die erfindungsgemässe Vorrichtung kann mit einer automatischen Anzeige und Aufzeichnung der Lagen der Giesslinien ausgerüstet sein. Bei kontinuierlichem Bewegen, insbesondere Rütteln des Streuelementes können Fehlersignale sofort nach Auffindung aufgezeichnet werden. Üblicherweise ist dies einem System vorzuziehen, bei dem es zuerst erforderlich ist, bevor eine Giesslinie aufgezeichnet werden kann, den Ursprung des Fehlersignals durch Testschütteln des Streuelementes zu überprüfen.

Gemäss einer weiteren Ausführungsform der Erfindung werden deshalb Mittel zum kontinuierlichen Schütteln des Streuelementes während der Qualitätsprüfung der Bahn vorgesehen.

Das Bewegen und Schütteln des Streuelementes lässt sich zweckmässig durch Rotieren einer Welle mittels eines Elektromotors bewirken. Vorausgesetzt, dass das Streuelement quer zur Bewegungsrichtung der Bahn geschüttelt wird und eine ausreichende Breite aufweist, kann das Streuelement auch in der Bewegungsrichtung der Bahn geschüttelt werden. Gemäss einer weiteren Ausführungsform der Erfindung sind deshalb Mittel vorgesehen, um mindestens das eine Ende des Streuelementes auf einer im wesentlichen elliptischen Bahn zu bewegen.

Eine weitere Ausführungsform besteht darin, das Streuelement an beiden Enden auf rechtwinklig zum Element angeordneten Blattfedern zu lagern. Diese Anordnung hat den Vorteil, dass keine gleitenden Oberflächen einer Abnutzung unterliegen und Staub produzieren. Bei geeigneter Anregung schwingen die Blattfedern sozusagen in der Art und Weise von belasteten Stimmgabeln. Die Anregung kann durch eine Magnetspule (zur Stossanregung) oder durch einen elektromagnetischen Vibrator oder Osizillator der zum Betrieb einer elektrisch in Schwingungen gehaltenen Stimmgabel verwendeten Art erfolgen. Manchmal kann die Gegenwart von Turbulenzströmungen in der Luft dazu ausreichen, die Blattfedern in Schwingungen zu halten.

Gemäss einer zusätzlichen Ausführungsform der Erfindung ist deshalb das Streuelement auf an den beiden Enden rechtwinklig zur Länge des Elements angebrachten Blattfedern gelagert, und es sind Mittel vorgesehen, um die Blattfedern in Schwingungen zu versetzen.

Vorzugsweise bewegt man das optische Streuelement quer zur Bewegungsrichtung der Bahn weiter als die wirksamen Abmessungen der Fehlstelle in der Ebene der Bahn, wie quer zur Bewegungsrichtung der Bahn gemessen.

Im folgenden wird die Erfindung anhand der Zeichnungen näher erläutert; es zeigen:

Fig. 1 eine vereinfachte perspektivische Darstellung eines Lichtpunktlaserabtasters nach dem Stand der Technik,

Fig. 2 eine vereinfachte perspektivische Darstellung eines Ausführungsbeispieles der erfindungsgemässen Vorrichtung,

Fig. 3 eine Detailvariante zu Fig. 1 in Seitenansicht, und

Fig. 4 eine weitere Variante derselben Details in Aufsicht.

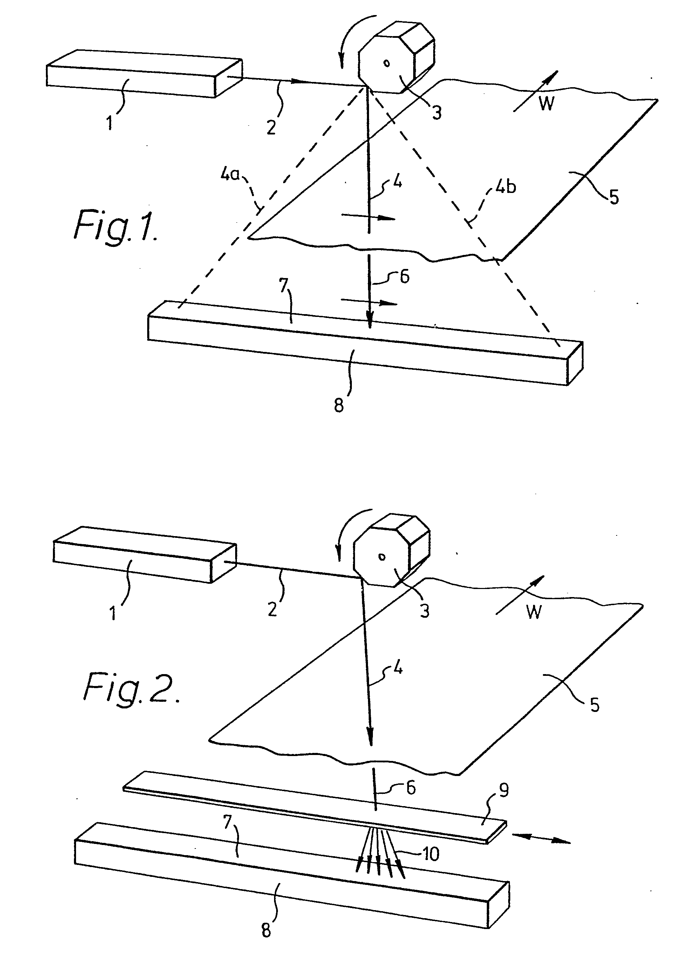

Gemäss den Fig. 1 und 2 projiziert ein Laser 1 einen Lichtstrahl 2 auf ein rotierendes Spiegelvieleck 3, von dem her der reflektierte Strahl 4 einen durch die Linien 4a und 4b begrenzten Winkel überstreicht, um dadurch eine auf der Bahn 5 quer zu deren durch den Pfeil W angedeuteten Bewegungsrichtung gelegene Strecke zu untersuchen. Ein Teil des Strahls 4 wird von der Bahn 5 durchgelassen und trifft direkt auf das Einfallfenster 7 des Lichtleitkastens 8, in dem sich eine Photozelle (nicht dargestellt) befindet. Der durchgelassene Strahl ist mit 6 bezeichnet.

Bei Bahnmaterialien, die eine sehr geringe Lichtstreuung erzeugen, ist der durchgelassene Strahl 6 genügend schmal, um durch Staubteilchen, Kratzer oder dergleichen auf dem Fenster 7 eine unerwünschte Modulation zu erleiden. Jedesmal, wenn der Strahl 6 auf ein solches Staubteilchen trifft, wird sich der auf die Bahn auftreffende Strahl 4 an der gleichen Stelle auf der Breite der Bahn 5 befinden. Bei der Untersuchung des Ausgangssignals der Photozelle besteht also keine Möglichkeit, das von einem solchen Staubteilchen verursachte Signal von dem von einer Giesslinie herrührenden Signal zu unterscheiden. Hin- und Herbewegen des Kastens 8 könnte eine solche Unterscheidung ermöglichen, doch ist dies üblicherweise unerwünscht wegen der Grösse und des Gewichts des Kastens und wegen der Notwendigkeit, die (nicht dargestellten) elektrischen Zuleitungen, welche die Photozelle mit den Anzeigegeräten ausserhalb des Kastens verbinden, mitzuschütteln.

Das in Fig. 2 dargestellte Ausführungsbeispiel der Erfindung unterscheidet sich von der in Fig. 1 gezeichneten Anordnung durch ein optisches Streuelement 9, welches zwischen dem Bahnmaterial 5 und dem Kasten 8 angeordnet ist. Gleiche Zahlen in den Fig. 1 und 2 bedeuten gleiche Teile. Das Streuelement 9 wirkt sich so aus, dass es die nicht abgelenkte Komponente 6 des Strahls 4 verbreitert, so dass ein Strahlenbündel 10 auf das Fenster 7 fällt. Beim Überstreichen der Bahn 5 durch den Strahl 4 überstreicht das Bündel 10 das Fenster 7. Da das Bündel 10 zu jeder Zeit eine erhebliche Fläche des Fensters 7 beleuchtet, wird die Auswirkung eines auf dem Fenster liegenden Staubteilchens oder dergleichen vernachlässigbar klein.

Sollte jedoch ein Staubteilchen auf dem Streuelement 9 im Strahlengang 6 liegen, so könnte dieses eine merkliche Störung im durch das Element 9 passierenden Licht und somit im Ausgangsstrom der Photozelle im Kasten 8 verursachen. Eine Hin- und Herbewegung des Elements 9, wie durch den Doppelpfeil in Fig. 2 angedeutet, hat zur Folge, dass diese Störung bei aufeinanderfolgenden Überstreichungen der Bahn 5 durch den Strahl 4 an verschiedenen Stellen erscheint. Staub auf dem Element 9 lässt sich also leicht von einer Giesslinie auf der Bahn 5 unterscheiden. Diese Unterscheidung kann durch Beobachtung der Wellenform des Photozellenstromes auf einem mit der Abtastbewegung des Strahls 4 synchronisierten Oszilloskop erfolgen. Auf einer solchen Anzeige wird eine wirkliche Giesslinie eine stillstehende Störung in der Wellenform hervorrufen, wogegen die von Staub auf dem Element 9 produzierten Störungen sich mit dem Element 9 mitbewegen.

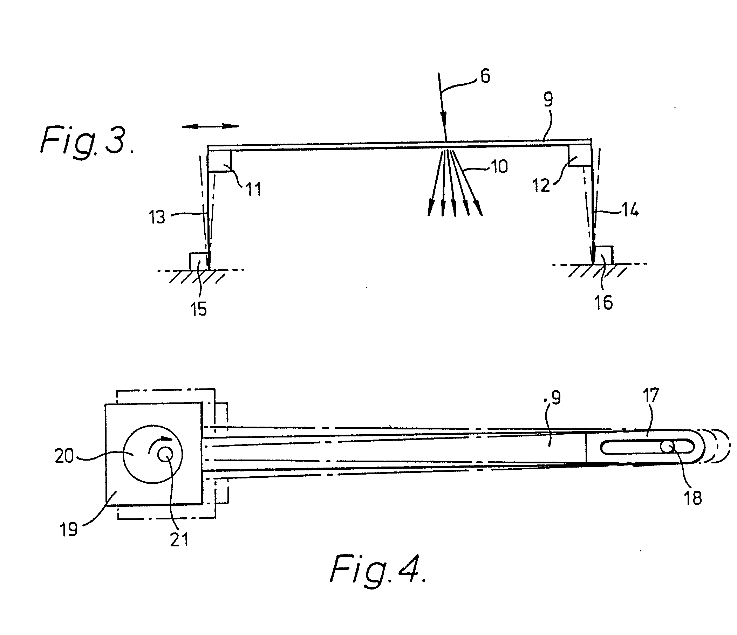

Fig. 3 zeigt eine Seitenansicht des Streuelements 9 und illustriert, wie der Strahl 6 zu einem Strahlenbündel 10 gestreut wird. An den Enden des Elements 9 befinden sich Blöcke 11 bzw. 12, an denen Blattfedern 13 und 14 angebracht sind. An ihrem anderen Ende sind die Blattfedern jeweils an Ankerblöcken 15 bzw. 16 befestigt. Das Element 9 kann sich also nur in der Richtung parallel zu seiner Länge und damit quer zur Bewegungsrichtung der Bahn, frei bewegen. Diese Art der Lagerung des Elements 9 ist nahezu reibungsfrei, und manchmal lässt sich das System durch die Turbulenz von Luftströmen in der Umgebung in Schwingungen halten. In anderen Fällen kann man das Element intermittierend durch den Aufschlag eines beispielsweise durch eine Magnetspule betätigten Hammers (nicht dargestellt) stossweise in Schwingungen versetzen. Auch kann der Block 12 mit einem elektrischen Kontakt versehen und die Federn 13 und 14 in einem sich selbst erregenden System, ähnlich dem bei Kontakthammerglocken oder Morsesummern verwendeten, in Schwingungen versetzt werden.

Fig. 4 zeigt eine alternative Ausführungsform, bei der ein Rotationsantrieb zum Schütteln des Elements 9 ausgenutzt wird. Gemäss der dargestellten Aufsicht ist an einem Ende des Streuelementes ein Langloch 17 vorgesehen, in das ein Zapfen 18 eingreift. Am anderen Ende ist das Element 9 an einen Exzenterantrieb 19, 20, 21 angeschlossen. Ein Motor (nicht dargestellt) versetzt die Welle 21 in Umdrehungen um ihr eigenes Zentrum. Die Umdrehung des Exzenters 20 innerhalb des Kardansteins 19 führt dann zu einer Bewegung des Steins 19 auf einer Kreisbahn, wie durch die gestrichelten Linien in Fig. 4 angedeutet. Dadurch werden alle Punkte auf dem Element 9 um eine Strecke, die der Exzentrizität des Exzenters 20 gleich ist, in Fig. 4 abwechslungsweise nach links und rechts bewegt. Ausserdem wird sich jeder Punkt um eine dem Abstand vom Zapfen 18 proportionale Strecke in der Bahnrichtung hin- und herbewegen. Diese zusätzliche Bewegung ist ohne Bedeutung, vorausgesetzt, dass man die Breite des Elements 9 grösser macht als die Breite des Fensters 7 (Fig. 2) plus der Gesamtexzentrizität des Exzenters.

## Patentansprüche

1. Vorrichtung zur Überprüfung einer durch Giessen beschichteten Materialbahn auf Giesslinien, bei welcher die zu prüfende Materialbahn (5) eine Qualitätsprüfungszone durchläuft, in der ein Lichtstrahlabtaster (1, 2, 3) mit quer zur Bahn verlaufender Strahlablenkung und ein Lichtempfänger (7, 8) mit einer Photozelle auf einander gegenüberliegenden Seiten der Materialbahn so angeordnet sind, dass die Photozelle über die gesamte Ablenkung bzw. Bahnbreite mit vom Lichtstrahl (4) stammendem transmittiertem Licht (6) beaufschlagbar ist, dadurch gekennzeichnet, dass dem Lichtempfänger (7, 8) ein das transmittierte Licht streuendes Element (9) vorgeschaltet ist und dass eine Antriebseinrichtung (13-21) zur Bewegung dieses Elements im wesentlichen quer zur Materialbahn vorgesehen ist.

2. Vorrichtung nach Anspruch 1, dadurch gekennzeichnet, dass das Streuelement (9) an einen Schüttelantrieb angeschlossen ist.

3. Vorrichtung nach einem der vorangehenden Ansprüche, dadurch gekennzeichnet, dass das Streuelement (9) durch einen quer zur Materialbahn (5) angeordneten Streifen gebildet ist, und dass dieser Streifen im wesentlichen quer zur Materialbahn hin- und herbewegbar ist.

4. Vorrichtung nach Anspruch 3, dadurch gekennzeichnet, dass der das Streuelement (9) bildende Streifen aus steifem Material besteht und an einem Ende mittels eines in Streifenrichtung verlaufenden Langlochs (17) und eines Bolzens (18) gelagert und am anderen Ende an einen Exzenterantrieb (19, 20, 21) angeschlossen ist.

5. Vorrichtung nach Anspruch 3, dadurch gekennzeichnet, dass der das Streuelement (9) bildende Streifen aus steifem Material besteht und an beiden Enden mittels je einer rechtwinklig zum Streifen verlaufenden und in Streifenrichtung biegsamen Blattfeder (13, 14) gelagert ist, und dass die Antriebseinrichtung dazu ausgebildet ist, diese Anordnung in Schwingungen zu versetzen.

## Claims

1. An apparatus for the detection of downlines on coated web material, wherein the web material is transported past an inspection zone, in which a light-beam scanning device having means for deflecting the beam in a direction transverse to the direction of web motion and a light receiving means incorporating a photocell are arranged on opposite sides of the web material in such a manner that the photocell is responsive, over the entire angle of deflection and width of web, to transmitted light originating from the reflected beam, characterised in that an element diffusing the transmitted light (diffusing element) is located in front of the light receiving means, and that a means for moving this element along a path essentially transverse to the direction of web transport is provided.

2. An apparatus according to claim 1, characterised in that the diffusing element is connected to an agitating mechanism.

3. An apparatus according to either of the preceding claims, characterised in that the diffusing element is in the form of a strip arranged transversely to the direction of web transport, and that this strip is moveable backwards and forwards along a path essentially transverse to the web direction.

4. An apparatus according to claim 3, characterised in that the strip forming the diffusing element is composed of rigid material, and is supported at one end by means of a member slotted in the strip direction and a pin, and is connected at the other end to an eccentric drive.

5. An apparatus according to claim 3, characterised in that the strip forming the diffusing element is composed of rigid material, and is supported at each end by a leaf spring attached at right angles to the length of the strip, and bendable in the direction of the strip, and that the drive means is designed to set this arrangement into oscillation.

## Revendications

1. Dispositif de contrôle à l'égard d'inégalités dites «lignes de coulée» d'une bande de matériau enduite par coulée dans lequel la bande de matériau à examiner (5) traverse une zone d'examen de qualité dans laquelle un palpeur à rayon lumineux (1, 2, 3) avec déviation du rayon transversale à la bande et un récepteur de lumière (7, 8) avec une cellule photo-électrique sont disposés sur des côtés opposés l'un à l'autre de la bande de matériau d'une façon telle que la cellule photo-électrique puisse être soumise, sur toute la déviation, ou largeur de bande, à l'action d'une lumière transmise (6) provenant du rayon lumineux (4), dispositif caractérisé par le fait que le récepteur de lumière (7, 8) est précédé d'un élément (9) dispersant la lumière transmise et qu'il est prévu un dispositif d'entraînement (13, 21) pour déplacer cet élément essentiellement en direction transversale à la bande de matériau.

2. Dispositif selon la revendication 1, caractérisé par le fait que l'élément de dispersion (9) est relié à un entraînement destiné à le secouer.

3. Dispositif selon l'une quelconque des revendications 1 ou 2, caractérisé par le fait que l'élément de dispersion (9) est formé par une bande disposée transversalement à la bande de matériau (5) et que cette bande (9) est déplaçable en va-et-vient en direction essentiellement transversale à la bande de matériau.

4. Dispositif selon la revendication 3, caractérisé par le fait que la bande formant l'élément de dispersion (9) est constituée par un matériau rigide et qu'elle est supportée à une de ses extrémités au moyen d'une boutonnière (17) de même direction qu'elle et d'un axe, ou téton (18), et reliée, à son autre extrémité, à un entraînement excentrique (19, 20, 21).

5. Dispositif selon la revendication 3, caractérisé par le fait que la bande formant l'élément de dispersion (9) est constituée par un matériau rigide et est supportée à ses deux extrémités au moyen de lames-ressorts (13, 14) de direction perpendiculaire à elle et flexibles en direction de ladite bande, et que le dispositif d'entraînement est établi pour mettre en vibration le dispositif ainsi formé.

Fig.1.

Fig.2.

*Fig. 3.*

*Fig. 4.*